# EUROPEAN PATENT APPLICATION

(11) **EP 4 610 063 A1**
(43) Date of publication of application: **03.09.2025**
(21) Application number: 25157891.0
(22) Date of filing: 14.02.2025
(51) Int. Cl.: B60C 19/00, G06K 19/077, H01Q 1/22, B60C 5/14, B60C 9/20, B60C 11/00

(54) **PNEUMATIC TIRE**

(30) Priority: 28.02.2024 JP 2024028895
(71) Applicant: Sumitomo Rubber Industries, Ltd., Kobe-shi, Hyogo-ken 651-0072 (JP)
(72) Inventor: YAGI, Kenta, Kobe-shi, 651-0072 (JP); OKAGAWA, Hiroshi, Kobe-shi, 651-0072 (JP); SAWAKAMI, Isao, Kobe-shi, 651-0072 (JP)
(74) Representative: Manitz Finsterwald Patent- und Rechtsanwaltspartnerschaft mbB

(57) **Abstract**

A pneumatic tire 1 includes a tread portion 2, a pair of bead portions 4, a carcass 6 extending on and between the pair of bead portions 4, a reinforcing layer 7 disposed outward of the carcass 6 in a tire radial direction in the tread portion 2, and a wireless tag 8 disposed inward of the carcass 6 in the tire radial direction in the tread portion 2. The reinforcing layer 7 includes at least one reinforcing ply 7A in which reinforcing cords 7a are arranged. The wireless tag 8 includes an electronic component body 9 that defines a longitudinal direction D, and an antenna portion 10 helically wound around the electronic component body 9 along the longitudinal direction D. The longitudinal direction D of the wireless tag 8 intersects all of the reinforcing cords 7a.

## Description

### BACKGROUND OF THE INVENTION

### Field of the Invention

The present invention relates to a pneumatic tire having a wireless tag.

### Background Art

Hitherto, a pneumatic tire having a wireless tag has been known. For example, Japanese Patent No. 7323023 suggests a tire that includes a tag member interposed between an outer apex and a sidewall and that achieves improvement in tag readability.

However, strain is likely to occur in sidewall portions during load application, and thus, damage caused by a wireless tag during a long period of use may occur also in the tire of Japanese Patent No. 7323023. Therefore, there has been demand for further improvement in durability performance.

The present invention has been made in view of the aforementioned circumstances, and a main object of the present invention is to provide a pneumatic tire that can achieve both communication performance and durability performance of a wireless tag.

### SUMMARY OF THE INVENTION

The present invention is directed to a pneumatic tire that includes: a tread portion; a pair of bead portions; a carcass extending on and between the pair of bead portions; a reinforcing layer disposed outward of the carcass in a tire radial direction in the tread portion; and a wireless tag disposed inward of the carcass in the tire radial direction in the tread portion. The reinforcing layer includes at least one reinforcing ply in which reinforcing cords are arranged. The wireless tag includes an electronic component body that defines a longitudinal direction, and an antenna portion helically wound around the electronic component body along the longitudinal direction. The longitudinal direction of the wireless tag intersects all of the reinforcing cords.

The pneumatic tire of the present invention has the above-described configuration, and thus can achieve both communication performance and durability performance of the wireless tag.

### BRIEF DESCRIPTION OF THE DRAWINGS

FIG. 1 is a cross-sectional view showing one embodiment of a pneumatic tire of the present invention;
FIG. 2 is an enlarged perspective view of a wireless tag;
FIG. 3 is a schematic view showing an arrangement state of the wireless tag;
FIG. 4 is an enlarged cross-sectional view showing a modification of a tread portion; and
FIG. 5 is a cross-sectional view of a pneumatic tire of another embodiment.

### DETAILED DESCRIPTION

Hereinafter, one embodiment of the present invention will be described in detail with reference to the drawings.

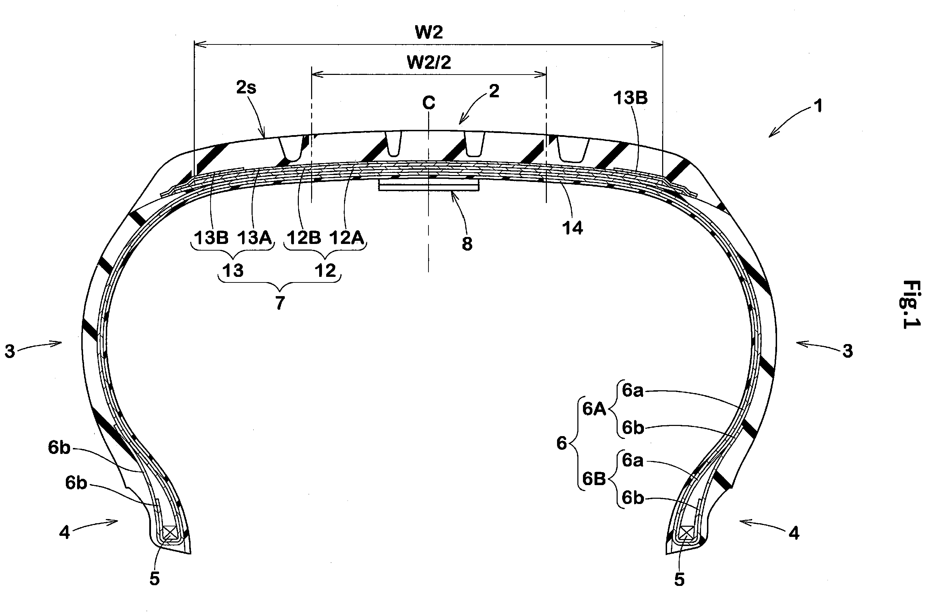

FIG. 1 is a tire meridian cross-sectional view showing a pneumatic tire 1 in a standardized state of the present embodiment. Here, the "standardized state" is a state in which the pneumatic tire 1 is mounted on a standardized rim and is adjusted to a standardized internal pressure, and no load is applied to the pneumatic tire 1. In the following, unless otherwise specified, dimensions and the like of components of the pneumatic tire 1 are values measured in the standardized state.

If there is a standard system including a standard on which the pneumatic tire 1 is based, the "standardized rim" is a rim that is defined for each tire by the standard, and is, for example, the "standard rim" in the JATMA standard, the "Design Rim" in the TRA standard, or the "Measuring Rim" in the ETRTO standard. If there is no standard system including a system on which the pneumatic tire 1 is based on, the "standardized rim" is a rim having the smallest rim diameter and having the smallest rim width, among rims on which the pneumatic tire 1 can be mounted and which do not cause air leakage.

If there is a standard system including a standard on which the pneumatic tire 1 is based, the "standardized internal pressure" is an air pressure defined for each tire by the standard and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. If there is no standard system including a standard on which the pneumatic tire 1 is based, the "standardized internal pressure" is an air pressure defined for each tire by the manufacturer or the like.

As shown in FIG. 1, the pneumatic tire 1 of the present embodiment includes a tread portion 2, a pair of sidewall portions 3, and a pair of bead portions 4. The tread portion 2 constitutes a ground-contact surface 2s. In addition, the pair of sidewall portions 3 extend inward in a tire radial direction from both sides of the tread portion 2 in a tire axial direction.

The pair of bead portions 4 are respectively located inward of the pair of sidewall portions 3 in the tire radial direction, and come into contact with a rim. The pair of bead portions 4 respectively have, for example, annular bead cores 5 extending in a tire circumferential direction. The bead cores 5 are formed from, for example, a steel wire.

The pneumatic tire 1 of the present embodiment includes a carcass 6 extending on and between the pair of bead portions 4, and a reinforcing layer 7 disposed outward of the carcass 6 in the tire radial direction in the tread portion 2. Such a pneumatic tire 1 can suppress, by means of the reinforcing layer 7, strain of the tread portion 2 during load application.

The reinforcing layer 7 of the present embodiment includes at least one reinforcing ply 7A in which reinforcing cords 7a are arranged. The reinforcing cords 7a are formed from, for example, metal such as steel. Such a reinforcing layer 7 can more reliably suppress the strain of the tread portion 2 during load application.

The pneumatic tire 1 of the present embodiment includes a wireless tag 8 disposed inward of the carcass 6 in the tire radial direction in the tread portion 2. In such a pneumatic tire 1, since the wireless tag 8 is disposed in the tread portion 2 where strain is small, an external force that acts on the wireless tag 8 is reduced, so that durability performance of the wireless tag 8 can be improved.

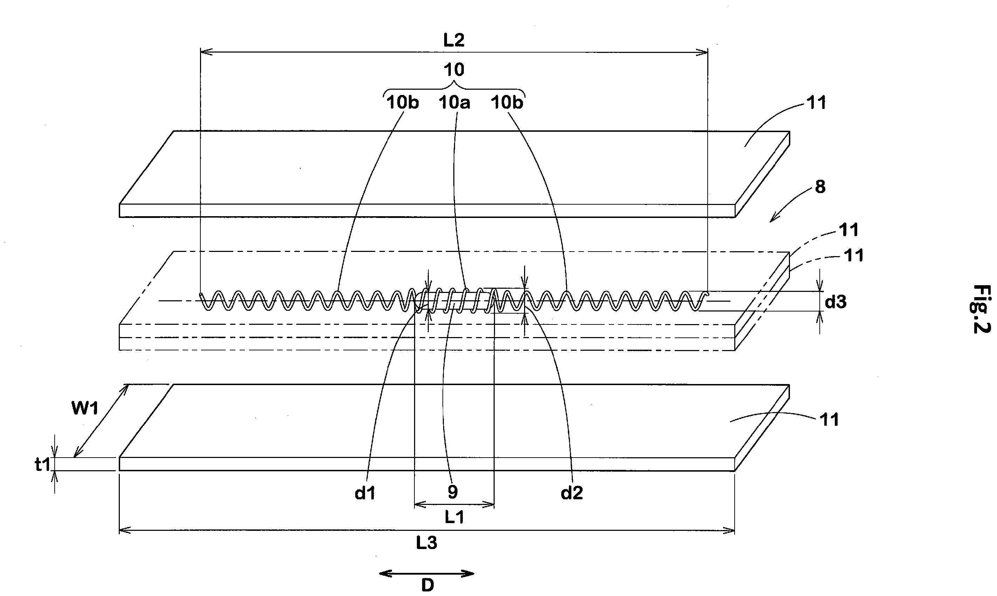

FIG. 2 is an enlarged perspective view of the wireless tag 8. As shown in FIG. 2, the wireless tag 8 of the present embodiment includes an electronic component body 9 that defines a longitudinal direction D, and an antenna portion 10 helically wound around the electronic component body 9 along the longitudinal direction D. The wireless tag 8 is, for example, an RFID tag for managing data of manufacturing management, customer information, running history, etc., of the pneumatic tire 1. Such a wireless tag 8 can communicate data recorded in the electronic component body 9 to an external device via the antenna portion 10.

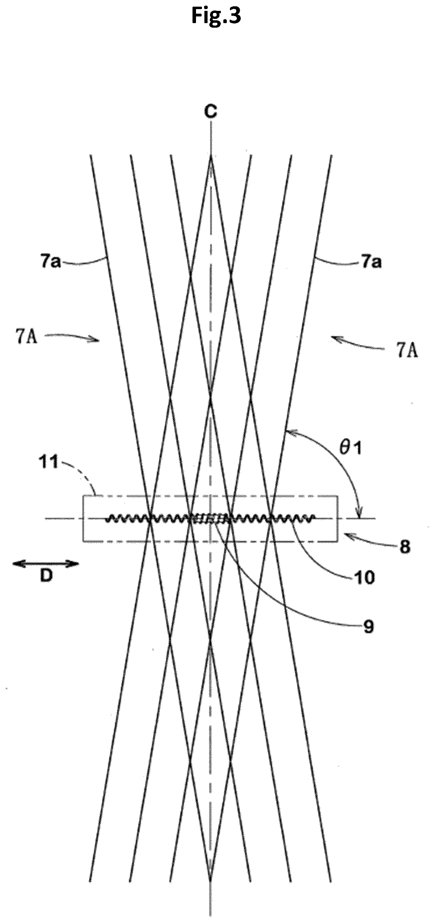

FIG. 3 is a schematic view showing an arrangement state of the wireless tag 8. As shown in FIG. 3, the longitudinal direction D of the wireless tag 8 of the present embodiment is a direction intersecting all of the reinforcing cords 7a. That is, the reinforcing layer 7 includes a plurality of reinforcing plies 7A, and, even if the respective reinforcing cords 7a of the plurality of reinforcing plies 7A are disposed in directions intersecting one another, the longitudinal direction D of the wireless tag 8 intersects all of the reinforcing cords 7a. This means that there is no reinforcing cord 7a that is parallel to the longitudinal direction D of the wireless tag 8.

In such a wireless tag 8, since the direction of a magnetic field formed at the antenna portion 10 and the direction of the reinforcing cords 7a intersect each other, communication performance can be improved. Thus, the pneumatic tire 1 of the present embodiment can achieve both communication performance and durability performance of the wireless tag 8.

In a more preferable mode, a smallest angle θ1 formed between the longitudinal direction D of the wireless tag 8 and the reinforcing cords 7a is not less than 30°. When the smallest angle θ1 is not less than 30°, the direction of a magnetic field formed at the antenna portion 10 can be inhibited from being parallel to the direction of the reinforcing cords 7a. From such a viewpoint, the smallest angle θ1 is more preferably not less than 60°.

As shown in FIG. 2, the electronic component body 9 includes, for example, chips such as a transmitter/receiver circuit, a control circuit, and a memory. The electronic component body 9 desirably has a substantially cylindrical shape as a whole. Such an electronic component body 9 has good strength against an external force, and suppresses the occurrence of failure and damage, and thus can improve durability performance. It is noted that the axial direction of the substantially cylindrical electronic component body 9 defines the longitudinal direction D.

A length L1 of the electronic component body 9 in the longitudinal direction D is preferably 10 to 30 mm. When the length L1 of the electronic component body 9 is not less than 10 mm, a large chip can be included, thus serving to improve communication performance. When the length L1 of the electronic component body 9 is not greater than 30 mm, deformation due to an external force acting thereon is suppressed, so that durability performance can be improved.

An outer diameter d1 of the electronic component body 9 is preferably 0.5 to 1.5 mm. When the outer diameter d1 of the electronic component body 9 is not less than 0.5 mm, a large chip can be included, thus serving to improve communication performance. When the outer diameter d1 of the electronic component body 9 is not greater than 1.5 mm, the occurrence of damage starting from the wireless tag 8 is suppressed, thus serving to improve durability performance of the pneumatic tire 1.

A length L2 of the antenna portion 10 in the longitudinal direction D is preferably 30 to 60 mm. When the length L2 of the antenna portion 10 is not less than 30 mm, a large magnetic field can be formed, so that communication performance can be improved. When the length L2 of the antenna portion 10 is not greater than 60 mm, the occurrence of damage starting from the wireless tag 8 is suppressed, thus serving to improve durability performance of the pneumatic tire 1.

The maximum outer diameter of the antenna portion 10 is preferably 1.3 to 1.9 mm. When the maximum outer diameter of the antenna portion 10 is not less than 1.3 mm, a large magnetic field can be formed, so that communication performance can be improved. When the maximum outer diameter of the antenna portion 10 is not greater than 1.9 mm, the occurrence of damage starting from the wireless tag 8 is suppressed, thus serving to improve durability performance of the pneumatic tire 1.

The antenna portion 10 of the present embodiment includes a center portion 10a located around the electronic component body 9 and a pair of extension portions 10b located on both sides of the center portion 10a in the longitudinal direction D. In the wireless tag 8 of this case, the length L2 of the antenna portion 10 is larger than the length L1 of the electronic component body 9. Such a wireless tag 8 can form a large magnetic field, and thus can improve communication performance.

An outer diameter d2 of the center portion 10a is desirably larger than an outer diameter d3 of each of the pair of extension portions 10b. The maximum outer diameter of the antenna portion 10 of the present embodiment is the outer diameter d2 of the center portion 10a. Such an antenna portion 10, by having small sized extension portions 10b, suppresses the occurrence of damage starting from the wireless tag 8, thus serving to improve durability performance of the pneumatic tire 1.

The wireless tag 8 of the present embodiment includes a pair of rubber layers 11 formed in a plate shape. The electronic component body 9 and the antenna portion 10 are desirably disposed between the pair of rubber layers 11. Such a wireless tag 8 can protect the electronic component body 9 and the antenna portion 10 by the pair of rubber layers 11, and thus can improve durability performance.

A length L3 of each of the pair of rubber layers 11 in the longitudinal direction D is preferably 45 to 70 mm. When the length L3 of the rubber layer 11 is not less than 45 mm, the entirety of the electronic component body 9 and the antenna portion 10 can be covered, thus serving to improve durability performance. When the length L3 of the rubber layer 11 is not greater than 70 mm, the occurrence of damage starting from the wireless tag 8 is suppressed, thus serving to improve durability performance of the pneumatic tire 1.

A width W1 of each of the pair of rubber layers 11 in a direction orthogonal to the longitudinal direction D is preferably 8 to 15 mm. When the width W1 of the rubber layers 11 is not less than 8 mm, the entirety of the electronic component body 9 and the antenna portion 10 can be covered, thus serving to improve durability performance. When the width W1 of the rubber layers 11 is not greater than 15 mm, the occurrence of damage starting from the wireless tag 8 is suppressed, thus serving to improve durability performance of the pneumatic tire 1.

A thickness t1 of each of the pair of rubber layers 11 is preferably 1.0 to 1.5 mm. When the thickness t1 of the rubber layers 11 is not less than 1.0 mm, the electronic component body 9 and the antenna portion 10 can be reliably covered, thus serving to improve durability performance. When the thickness t1 of the rubber layers 11 is not greater than 1.5 mm, the occurrence of damage starting from the wireless tag 8 is suppressed, thus serving to improve durability performance of the pneumatic tire 1.

The electrical resistivity of each of the pair of rubber layers 11 is preferably not less than 10¹⁰ Ω·cm. Such rubber layers 11 suppress attenuation of electromagnetic waves when passing therethrough, and thus can improve communication performance. From such a viewpoint, the electrical resistivity of each of the pair of rubber layers 11 is more preferably not less than 10¹² Ω·cm.

As shown in FIG. 1, the carcass 6 includes at least one carcass ply. In the present embodiment, the carcass 6 includes two carcass plies 6A, 6B. The two carcass plies 6A, 6B include, for example, a first carcass ply 6A located inward in the tire radial direction and a second carcass ply 6B located outward of the first carcass ply 6A in the tire radial direction in the tread portion 2.

At least one of the carcass plies 6A, 6B desirably has a body portion 6a extending from the tread portion 2 through the sidewall portions 3 to the bead cores 5 of the bead portions 4, and turned-up portions 6b that are continuous with the body portion 6a and are turned up around the bead cores 5 from the inner side to the outer side in the tire axial direction. Each of the first carcass ply 6A and the second carcass ply 6B of the present embodiment includes the body portion 6a and the turned-up portions 6b.

The carcass plies 6A, 6B include carcass cords (not shown) each formed from, for example, an organic fiber cord. For example, examples of the organic fiber cord include a cord of a hybrid fiber of two or more fibers or one fiber selected from the group consisting of polyethylene terephthalate fibers, polyethylene naphthalate fibers, nylon fibers, aramid fibers, and rayon fibers.

The carcass cords are disposed at an angle of preferably 25 to 90° relative to the tire circumferential direction. Here, the angle of the carcass cords is an angle in the pneumatic tire 1 in the standardized state, and can be confirmed, for example, by partially peeling off the tread portion 2.

When the carcass cords are tilted at an angle of less than 90° relative to the tire circumferential direction, the carcass cords of the first carcass ply 6A and the carcass cords of the second carcass ply 6B are desirably tilted relative to the tire circumferential direction in directions opposite to each other. For the carcass 6, a bias structure may be employed, for example.

The reinforcing layer 7 of the present embodiment includes a belt layer 12 disposed outward of the carcass 6 in the tire radial direction and a band layer 13 disposed outward of the belt layer 12 in the tire radial direction in the tread portion 2. When the carcass 6 has a bias structure, the reinforcing layer 7 may include, for example, a breaker layer. Such a reinforcing layer 7 suppresses the strain of the tread portion 2, thus serving to improve durability performance of the wireless tag 8.

The belt layer 12 includes at least one belt ply. In the present embodiment, the belt layer 12 includes two belt plies 12A, 12B. The two belt plies 12A, 12B include, for example, a first belt ply 12A located inward in the tire radial direction and a second belt ply 12B located outward of the first belt ply 12A in the tire radial direction.

The belt plies 12A, 12B include belt cords formed from, for example, steel cords. In the present embodiment, the belt cords constitute the reinforcing cords 7a (shown in FIG. 3). The belt cords each may be, for example, a steel single wire or a twisted wire obtained by twisting a plurality of steel filaments together.

The belt cords are disposed at an angle of, for example, 10 to 30° relative to the tire circumferential direction. The belt cords of the first belt ply 12A and the belt cords of the second belt ply 12B are desirably tilted relative to the tire circumferential direction in directions opposite to each other.

Such a belt layer 12 can enhance the stiffness of the tread portion 2 in a well-balanced manner and thus can suppress the strain of the tread portion 2. Here, the angle of the belt cords is an angle in the pneumatic tire 1 in the standardized state, and can be confirmed, for example, by partially peeling off the tread portion 2.

At least one of the belt plies 12A, 12B includes an outermost belt ply disposed on the outermost side in the tire radial direction. The outermost belt ply of the present embodiment is a second belt ply 12B. In the belt layer 12, if, for example, the belt ply 12A is composed only of the first belt ply 12A, the first belt ply 12A constitutes the outermost belt ply.

The wireless tag 8 is disposed within a range of a width W2 of the outermost belt ply, which is the second belt ply 12B in the present embodiment, in the tire axial direction. Such a wireless tag 8 is disposed in a region of the tread portion 2 where strain is small, and thus can improve durability performance.

The wireless tag 8 of the present embodiment is disposed within a range of 1/2 of the width W2 of the outermost belt ply, which is the second belt ply 12B, so as to be centered about a tire equator C in the tire axial direction. Such a wireless tag 8 is disposed in a region of the tread portion 2 where strain is the smallest, and thus can more reliably improve durability performance.

The band layer 13 includes at least one band ply, which is one band ply 13A in the present embodiment, and a pair of edge bands 13B that cover outer sides of the band ply 13A in the tire axial direction. In each of the band ply 13A and the edge bands 13B, at least one band cord is disposed at an angle of desirably not greater than 5° relative to the tire circumferential direction. Here, the angle of the band cord is an angle in the pneumatic tire 1 in the standardized state, and can be confirmed, for example, by partially peeling off the tread portion 2.

The band cord is formed from, for example, metal or an organic fiber. When the band cord is metal, the band cord is desirably formed from a steel single wire or a twisted wire which is obtained by twisting a plurality of steel filaments together and whose surface is plated or ternary alloy-plated. When the band cord is metal, the reinforcing cords 7a (shown in FIG. 3) may include the band cord.

When the band cord is an organic fiber, the band cord is desirably a hybrid fiber of two or more fibers or one fiber selected from the group consisting of polyethylene terephthalate fibers, polyethylene naphthalate fibers, nylon fibers, aramid fibers, and rayon fibers.

The pneumatic tire 1 of the present embodiment includes an inner liner 14 disposed on a tire inner cavity surface side of the carcass 6. The wireless tag 8 of the present embodiment is disposed on an inner cavity surface of the inner liner 14. Such a wireless tag 8 can be separated from the reinforcing cords 7a (shown in FIG. 3), and thus can improve communication performance.

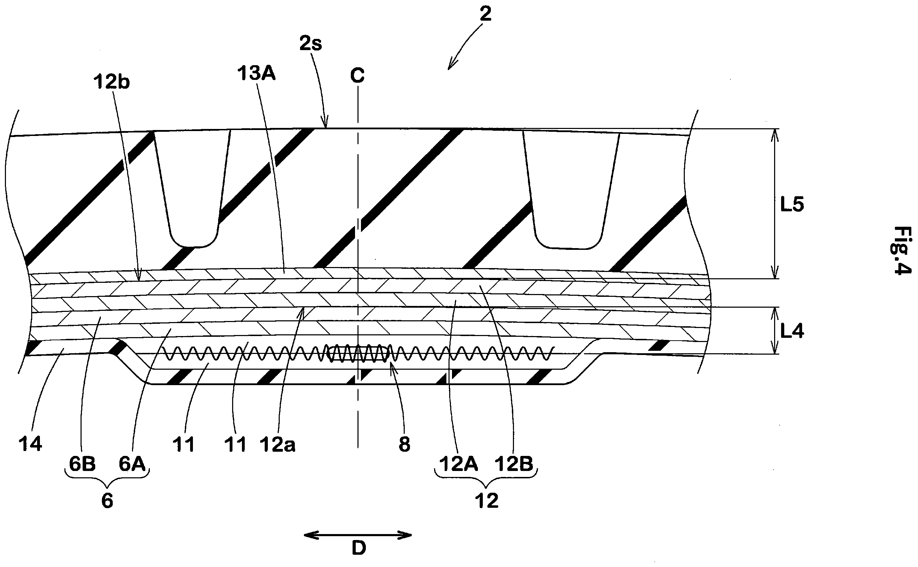

FIG. 4 is an enlarged cross-sectional view showing a modification of the tread portion 2. As shown in FIG. 4, the wireless tag 8 may be disposed, for example, between the carcass 6 and the inner liner 14. Such a wireless tag 8 can maintain a stable arrangement state even when a large external force acts thereon during load application, and thus can improve durability performance.

A distance L4, in the tire radial direction, from an inner surface 12a of the belt layer 12 in the tire radial direction to the center of the wireless tag 8 is preferably 25 to 400% of a distance L5, in the tire radial direction, from an outer surface 12b of the belt layer 12 in the tire radial direction to the ground-contact surface 2s. When the distance L4 is not less than 25% of the distance L5, the wireless tag 8 can be separated from the reinforcing cords 7a (shown in FIG. 3), so that communication performance can be improved.

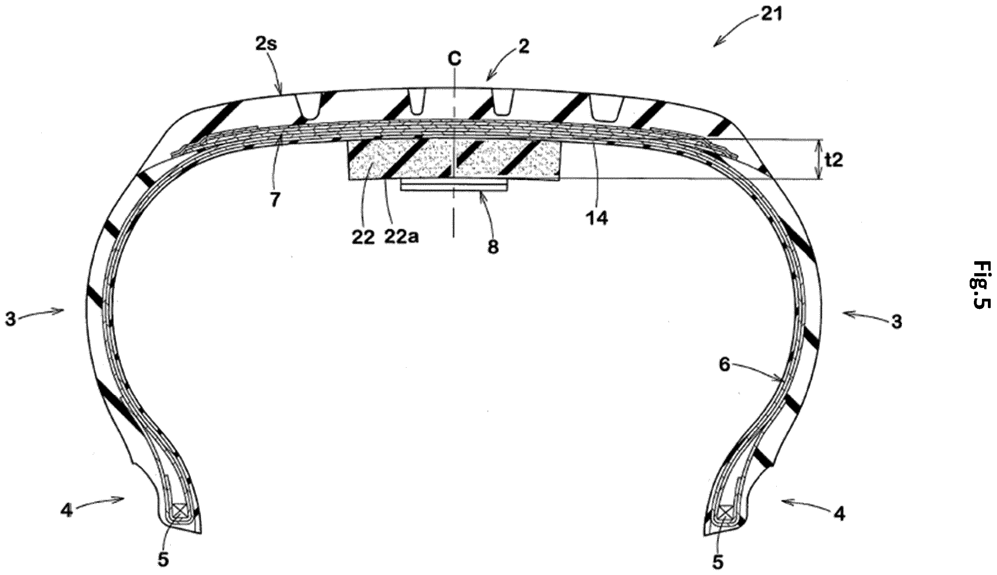

When the distance L4 is not greater than 400% of the distance L5, even when the wireless tag 8 is disposed on a sound absorbing material 22 (shown in FIG. 5) described below, the sound absorbing material 22 can be inhibited from being excessively enlarged. It is noted that when the sound absorbing material 22 is not disposed, the distance L4 is preferably not greater than 100% of the distance L5.

FIG. 5 is a tire meridian cross-sectional view showing a pneumatic tire 21 in a standardized state of another embodiment. The same components as those of the above-described embodiment are denoted by the same reference characters, and the description thereof is omitted. As shown in FIG. 5, similar to the above-described pneumatic tire 1, the pneumatic tire 21 of this embodiment includes a tread portion 2, a pair of sidewall portions 3, and a pair of bead portions 4.

Similar to the above-described pneumatic tire 1, the pneumatic tire 21 includes a carcass 6, a reinforcing layer 7, and an inner liner 14. The pneumatic tire 21 of this embodiment includes a sound absorbing material 22 disposed on a tire inner cavity surface of the inner liner 14. Such a pneumatic tire 21 can improve noise performance.

Similar to the above-described pneumatic tire 1, the pneumatic tire 21 of this embodiment includes a wireless tag 8 disposed inward of the carcass 6 in the tire radial direction in the tread portion 2. The wireless tag 8 is desirably disposed on the sound absorbing material 22. The wireless tag 8 of the embodiment is disposed on an inner surface 22a of the sound absorbing material 22. Such a pneumatic tire 21 can increase the distance L4 (shown in FIG. 4) between the wireless tag 8 and the reinforcing layer 7, and thus can improve communication performance.

A maximum thickness t2 of the sound absorbing material 22 is preferably not less than 5 mm. Such a sound absorbing material 22 has excellent sound absorbing performance.

In addition, such a sound absorbing material 22 can reliably enlarge the distance L4 (shown in FIG. 4) between the wireless tag 8 and the reinforcing layer 7, and thus can improve communication performance.

Although not shown, the wireless tag 8 may be disposed, for example, inside the sound absorbing material 22. Such a wireless tag 8 is protected by the sound absorbing material 22, and thus can improve durability performance. In addition, the wireless tag 8 can be maintained in a stable arrangement state even when a large external force acts thereon during load application, and thus can improve durability performance.

Although the particularly preferred embodiments of the present invention have been described in detail above, the present invention is not limited to the above-described embodiments, and various modifications can be made to implement the present invention.

### [Additional Notes]

The present invention is as follows.

### [Present Invention 1]

A pneumatic tire including:
a tread portion;
a pair of bead portions;
a carcass extending on and between the pair of bead portions;
a reinforcing layer disposed outward of the carcass in a tire radial direction in the tread portion; and
a wireless tag disposed inward of the carcass in the tire radial direction in the tread portion, wherein
the reinforcing layer includes at least one reinforcing ply in which reinforcing cords are arranged,
the wireless tag includes an electronic component body that defines a longitudinal direction, and an antenna portion helically wound around the electronic component body along the longitudinal direction, and
the longitudinal direction of the wireless tag intersects all of the reinforcing cords.

### [Present Invention 2]

The pneumatic tire according to Present Invention 1, wherein the antenna portion includes a center portion located around the electronic component body, and a pair of extension portions located on both sides of the center portion in the longitudinal direction.

[Present Invention 3] The pneumatic tire according to Present Invention 2, wherein an outer diameter of the antenna portion is 1.3 to 1.9 mm.

[Present Invention 4] The pneumatic tire according to Present Invention 3, wherein an outer diameter of the center portion is larger than an outer diameter of each of the pair of extension portions.

[Present Invention 5]
The pneumatic tire according to any one of Present Inventions 1 to 4, wherein
the wireless tag includes a pair of rubber layers formed in a plate shape, and
the electronic component body and the antenna portion are disposed between the pair of rubber layers.

[Present Invention 6]
The pneumatic tire according to Present Invention 5, wherein an electrical resistivity of each of the pair of rubber layers is not less than 10¹⁰ Ω·cm.

[Present Invention 7]
The pneumatic tire according to Present Invention 5 or 6, wherein a thickness of each of the pair of rubber layers is 1.0 to 1.5 mm.

[Present Invention 8]
The pneumatic tire according to any one of Present Inventions 1 to 7, wherein
the reinforcing layer includes a belt layer including at least one belt ply,
the at least one belt ply includes an outermost belt ply disposed on an outermost side in the tire radial direction, and
the wireless tag is disposed within a range of the outermost belt ply in the tire axial direction.

[Present Invention 9]
The pneumatic tire according to Present Invention 8, wherein the wireless tag is disposed within a range of 1/2 of a width of the outermost belt ply, so as to be centered about a tire equator in the tire axial direction.

[Present Invention 10]
The pneumatic tire according to Present Invention 8 or 9, wherein a distance, in the tire radial direction, from an inner surface of the belt layer in the tire radial direction to a center of the wireless tag is 25 to 400% of a distance, in the tire radial direction, from an outer surface of the belt layer in the tire radial direction to a ground-contact surface.

[Present Invention 11]
The pneumatic tire according to any one of Present Inventions 1 to 10, further including an inner liner disposed on a tire inner cavity surface side of the carcass, wherein
the wireless tag is disposed between the carcass and the inner liner.

[Present Invention 12]
The pneumatic tire according to any one of Present Inventions 1 to 10, further including a sound absorbing material disposed on a tire inner cavity surface, wherein
the wireless tag is disposed on the sound absorbing material.

[Present Invention 13]
The pneumatic tire according to any one of Present Inventions 1 to 12, wherein a smallest angle formed between the longitudinal direction of the wireless tag and the reinforcing cords is not less than 30°.

## Claims

1. A pneumatic tire (1, 21) comprising:
a tread portion (2);
a pair of bead portions (4);
a carcass (6) extending on and between the pair of bead portions (4);
a reinforcing layer (7) disposed outward of the carcass (6) in a tire radial direction in the tread portion (2); and
a wireless tag (8) disposed inward of the carcass (6) in the tire radial direction in the tread portion (2), wherein
the reinforcing layer (7) includes at least one reinforcing ply (7A) in which reinforcing cords (7a) are arranged,
the wireless tag (8) includes an electronic component body (9) that defines a longitudinal direction (D), and an antenna portion (10) helically wound around the electronic component body (9) along the longitudinal direction (D), and
the longitudinal direction (D) of the wireless tag (8) intersects all of the reinforcing cords (7a).

2. The pneumatic tire (1, 21) according to claim 1, wherein the antenna portion (10) includes a center portion (10a) located around the electronic component body (9), and a pair of extension portions (10b) located on both sides of the center portion (10a) in the longitudinal direction (D).

3. The pneumatic tire (1, 21) according to claim 2, wherein an outer diameter of the antenna portion (10) is 1.3 to 1.9 mm.

4. The pneumatic tire according to claim 3, wherein an outer diameter (d2) of the center portion (10a) is larger than an outer diameter (d3) of each of the pair of extension portions (10b).

5. The pneumatic tire (1, 21) according to any one of claims 1 to 4, wherein
the wireless tag (8) includes a pair of rubber layers (11) formed in a plate shape, and
the electronic component body (9) and the antenna portion (10) are disposed between the pair of rubber layers (11).

6. The pneumatic tire (1, 21) according to claim 5, wherein an electrical resistivity of each of the pair of rubber layers (11) is not less than 10¹⁰ Ω·cm.

7. The pneumatic tire (1, 21) according to claim 5 or 6, wherein a thickness (t1) of each of the pair of rubber layers (11) is 1.0 to 1.5 mm.

8. The pneumatic tire (1, 21) according to any one of claims 1 to 7, wherein
the reinforcing layer (7) includes a belt layer (12) including at least one belt ply (12A, 12B),
the at least one belt ply (12A, 12B) includes an outermost belt ply (12A, 12B) disposed on an outermost side in the tire radial direction, and
the wireless tag (8) is disposed within a range of the outermost belt ply (12A, 12B) in the tire axial direction.

9. The pneumatic tire (1, 21) according to claim 8, wherein the wireless tag (8) is disposed within a range of 1/2 of a width (W2) of the outermost belt ply, so as to be centered about a tire equator (C) in the tire axial direction.

10. The pneumatic tire (1) according to claim 8 or 9, wherein a distance (L4), in the tire radial direction, from an inner surface (12a) of the belt layer (12) in the tire radial direction to a center of the wireless tag (8) is 25 to 400% of a distance (L5), in the tire radial direction, from an outer surface (12b) of the belt layer (12) in the tire radial direction to a ground-contact surface (2s).

11. The pneumatic tire (1) according to any one of claims 1 to 10, further comprising an inner liner (14) disposed on a tire inner cavity surface side of the carcass (6), wherein
the wireless tag (8) is disposed between the carcass (6) and the inner liner (14).

12. The pneumatic tire (21) according to any one of claims 1 to 10, further comprising a sound absorbing material (22) disposed on a tire inner cavity surface, wherein
the wireless tag (8) is disposed on the sound absorbing material (22).

13. The pneumatic tire (1) according to any one of claims 1 to 12, wherein a smallest angle (θ1) formed between the longitudinal direction (D) of the wireless tag (8) and the reinforcing cords (7a) is not less than 30°.
